# EUROPÄISCHE PATENTSCHRIFT

(11) **EP 2 724 126 B1**
(45) Veröffentlichungstag und Bekanntmachung des Hinweises auf die Patenterteilung: **22.08.2018**
(21) Anmeldenummer: 12722381.6
(22) Anmeldetag: 21.05.2012
(51) Int. Cl.: G01G 11/04, A23B 4/28, A22C 9/00, A22C 17/00

(54) **VERFAHREN UND VORRICHTUNG ZUR BEHANDLUNG VON LEBENSMITTELPRODUKTEN**
METHOD AND DEVICE FOR TREATING FOOD PRODUCTS
PROCÉDÉ ET DISPOSITIF DE TRAITEMENT DE DENRÉES ALIMENTAIRES

(30) Priorität: 22.06.2011 DE 102011051254
(43) Veröffentlichungstag der Anmeldung: 30.04.2014
(73) Patentinhaber: Schröder Maschinenbau KG, 33824 Werther (DE)
(72) Erfinder: DANWERTH, Peter J., 33803 Steinhagen (DE)
(74) Vertreter: Ter Meer Steinmeister & Partner
(86) Internationale Anmeldenummer: PCT/EP2012/059411
(87) Internationale Veröffentlichungsnummer: WO 2012/175262

(56) Entgegenhaltungen:
- EP-A1- 1 839 489
- EP-A2- 0 496 693
- WO-A1-02/084232
- DD-A5- 229 016
- DE-U1- 20 303 126
- US-A- 4 126 196
- US-A- 4 509 609
- US-A- 4 611 676

## Beschreibung

Die Erfindung betrifft ein Verfahren zur Behandlung von Lebensmittelprodukten gemäß dem Oberbegriff von Anspruch 1. Weiterhin betrifft die Erfindung eine Vorrichtung gemäß dem Oberbegriff von Anspruch 6 zur Durchführung dieses Verfahrens.
Ein Beispiel für eine solche Vorrichtung ist ein Injektor, mit dem Pökellake oder andere Flüssigkeiten in Lebensmittelprodukte wie beispielsweise Fleisch, Fisch oder Geflügel injiziert werden.

Ein bekanntes Verfahren zur Behandlung von Lebensmittelprodukten wird in EP 0 496 693 A2 beschrieben. Die Eingangswaage und die Ausgangswaage dienen dazu, das Gewicht der Lebensmittelprodukte im Zustand vor der Injektion der Flüssigkeit und nach der Injektion zu messen, so dass anhand eines Vergleichs der Messergebnisse die Gewichtszunahme der Lebensmittelprodukte und damit die Menge an injizierter Flüssigkeit bestimmt werden kann. Die Fördereinrichtung ist in drei voneinander getrennte Förderabschnitte unterteilt, von denen einer den Wiegetisch der Eingangswaage und ein anderer den Wiegetisch der Ausgangswaage bildet. Die Behandlungseinrichtung (der Injektor) ist über einem weiteren Förderabschnitt angeordnet, der die zur Eingangswaage und zur Ausgangswaage gehörenden Förderabschnitte verbindet, so dass eine durchgehende Förderstrecke für die Lebensmittelprodukte geschaffen wird, wobei die Produkte jeweils am Ende eines Förderabschnitts auf den nachfolgenden Förderabschnitt übergeben werden. Die jeweils durch einen der Förderabschnitte gebildeten Wiegetische der Eingangswaage und der Ausgangswaage sind somit mechanisch entkoppelt, so dass jeweils nur die Produkte gewogen werden, die sich auf dem betreffenden Wiegetisch befinden. Mit Hilfe der Fördereinrichtung werden die Produkte taktweise vorgerückt, und der Takt des Injektors ist so mit dem Takt der Fördereinrichtung synchronisiert, dass sich ein Nadelträger des Injektors immer dann auf den mittleren Förderabschnitt und die darauf liegenden Lebensmittelprodukte absenkt, wenn diese unter dem Injektor in Ruhe sind. Der Nadelträger ist mit nach unten gerichteten Nadeln bestückt, die dann in die Lebensmittelprodukte einstechen, so dass die Flüssigkeit durch die Nadeln in das Produkt injiziert wird.
Aus US 4 126 196 ist eine Verwiegeeinrichtung bekannt, die eine Kraftmesseinrichtung aufweist, die den biegeschlaffen Förderabschnitt eines Förderers für die Produkte von unten abstützt. Eine elektronische Auswerteeinrichtung dient zum Aufnehmen einer Kraft/Weg-Funktion, die die von der Kraftmesseinrichtung gemessene Gewichtskraft in Abhängigkeit von dem von der Fördereinrichtung zurückgelegten Förderweg angibt, und zum Berechnen des Massendurchsatzes der Fördereinrichtung durch Auswertung der Kraft/Weg-Funktion. In EP 1 839 489 A1 wird eine Pökelanlage beschrieben, mit der das Gewicht von Schinken vor und nach dem Pökelvorgang gemessen werden kann. Dazu werden die Schinken auf dem Förderer so ausgerichtet, dass sie in Förderrichtung gleichbleibende Abstände zueinander aufweisen, so dass sie einzeln nacheinander gewogen werden können. Eine Aufgabe der Erfindung ist es, ein Verfahren anzugeben, das eine genauere Kontrolle der bei der Behandlung eintretenden Massenänderung erlaubt. Die Erfindung ist in den unabhängigen Ansprüchen 1 und 6 definiert. Diese Aufgabe wird bei einem Verfahren der eingangs genannten Art erfindungsgemäß dadurch gelöst, dass die Massenverwiegung mit der Eingangswaage und der Ausgangswaage jeweils die folgenden Schritte aufweist:
- fortlaufendes Messen der auf den biegeschlaffen Förderabschnitt wirkenden Gewichtskraft, während die Massen auf diesem Förderabschnitt transportiert werden,
- Aufnehmen einer Kraft/Weg-Funktion, die die gemessene Gewichtskraft in Abhängigkeit von dem von der Fördereinrichtung zurückgelegten Förderweg angibt, und
- Berechnen des Massendurchsatzes der Fördereinrichtung durch Auswertung der Kraft/Weg-Funktion.
Dieses Verfahren ist besonders vorteilhaft in Verbindung mit der Behandlung von Lebensmittelprodukten, beispielsweise in Verbindung mit einem Pökelinjektor, weil dann die Lebensmittelprodukte in dichter Folge oder quasi lückenlos auf die Fördereinrichtung aufgegeben werden können. Das erlaubt nicht nur eine größere Effizienz bei der Ausführung der Wiegeprozesse, sondern auch eine größere Effizienz der Pökelvorrichtung. Ein weiterer Vorteil besteht darin, dass die Waagen nicht mehr mit dem Arbeitstakt der Pökelvorrichtung synchronisiert zu werden brauchen. Es ist nicht einmal mehr erforderlich, dass die Pökelvorrichtung oder, allgemeiner, die Vorrichtung zur Behandlung der Lebensmittelprodukte überhaupt taktweise arbeitet. Beispielsweise könnte die Pökelvorrichtung auch mit mitlaufenden Nadelträgern ausgerüstet sein, die sich mit der Fördereinrichtung mitbewegen, so dass der Transport der Lebensmittelprodukte auf der Fördereinrichtung nicht unterbrochen zu werden braucht.
Bei einer erfindungsgemäßen Vorrichtung zur Behandlung von Lebensmittelprodukten arbeiten die Eingangswaage und die Ausgangswaage jeweils nach dem oben beschriebenen Prinzip, und sie sind an einem gemeinsamen, durchgehenden und in vertikaler Richtung biegeschlaffen Förderabschnitt der Fördereinrichtung angeordnet. Das hat den Vorteil, dass keine Übergabe der Produkte von einem Abschnitt der Fördereinrichtung zum nächsten stattzufinden braucht. Das erlaubt nicht nur einen kompakteren Aufbau der Vorrichtung, sondern verhindert auch die Entstehung von Vibrationen, die sonst unvermeidlich mit dem Übergang der Produkte von einem Abschnitt zum nächsten verbunden wären und das Wiegeergebnis verfälschen könnten. Bei der Wiegung braucht somit nicht das Abklingen dieser Vibrationen abgewartet zu werden, so dass in kürzerer Zeit ein genaues Wiegeergebnis erhalten werden kann.

Wenn sich Fremdkörper, beispielsweise kleinere Fleischreste, Flüssigkeitslachen oder dergleichen auf dem Förderabschnitt befinden, so bewegen sich auch diese Fremdkörper mit dem Förderabschnitt und den darauf liegenden Produkten mit, so dass die Produkte in der Eingangswaage und in der Ausgangswaage jeweils zusammen mit denselben Fremdkörpern gewogen werden. Die Fremdkörper haben deshalb auf die Bestimmung des Gewichtsunterschieds keinen Einfluss.

Vorteilhafte Ausgestaltungen und Weiterbildungen der Erfindung sind in den Unteransprüchen angegeben.

In einer vorteilhaften Ausführungsform wird der biegeschlaffe Förderabschnitt auf einer gewissen Länge gleichmäßig durch eine Kraftmesseinrichtung abgestützt. Wenn eine idealisiert als punktförmig gedachte Masse auf der Fördereinrichtung transportiert wird und den abgestützten Förderabschnitt erreicht, so zeigt die Kraftmesseinrichtung einen sprunghaften Anstieg der Kraft an. Diese Kraft bleibt dann nahezu konstant, während sich die Masse über den abgestützten Förderabschnitt bewegt, und sie nimmt sprunghaft wieder auf null ab, wenn die Masse den Förderabschnitt verlässt. Der Massenwert ist dann nicht nur proportional zu der gemessenen Kraft, sondern auch proportional zum Integral der Kraft/Weg-Funktion über die Länge des abgestützten Förderabschnitts. Wenn anstelle einer einzelnen punktförmigen Masse ein kontinuierlicher Massenstrom zu verwiegen ist, so ist das Integral der Kraft/Weg-Funktion proportional zum Massendurchsatz, der auf diese Weise kontinuierlich gemessen werden kann, mit einer räumlichen Auflösung, die der Länge des abgestützten Förderabschnitts entspricht.

Solange die Fördereinrichtung mit konstanter Geschwindigkeit läuft, ist die Integration über den Weg äquivalent zu einer Integration über die Zeit. Wenn jedoch über den Weg integriert wird, kann die Fördereinrichtung auch mit variabler Geschwindigkeit, insbesondere auch taktweise betrieben werden.

Andererseits kann durch Auswertung der Kraft/Weg-Funktion die Massenverteilung längs des Förderers auch mit höherer Auflösung gemessen werden. Wenn eine Charge von aufeinanderfolgenden Lebensmittelprodukten auf die Fördereinrichtung aufgegeben wird, so liefert die Kraftmesseinrichtung ein erstes Signal, wenn das erste dieser Produkte den abgestützten Förderabschnitt erreicht. Während sich dieses Produkt über den abgestützten Abschnitt bewegt, steigt das Kraftsignal in dem Maße an, in dem weitere Produkte auf den abgestützten Abschnitt gelangen. Am Ende der Förderstrecke, die der Länge des abgestützten Abschnitts entspricht, erhält man daher das Gesamtgewicht der zu diesem Zeitpunkt auf dem abgestützten Abschnitt liegenden Produkte. Bei fortgesetztem Betrieb der Fördereinrichtung nimmt die gemessene Kraft zu, wenn die Masse der neu zugeführten Produkte größer ist als die Masse der Produkte, die am stromabwärtigen Ende den abgestützten Abschnitt verlassen. Wenn man die Kraft/Weg-Funktion jeweils am Beginn und am Ende des abgestützten Förderabschnitts differenziert und die Differenz der beiden Ableitungen bildet, erhält man somit ein hochaufgelöstes Maß für die Masse pro Längeneinheit, die die Wiegevorrichtung verlässt.

Es sind auch Ausführungsformen denkbar, bei denen der biegeschlaffe Förderabschnitt nur an einem Punkt durch die Kraftmesseinrichtung abgestützt wird oder auf einer Klappe aufliegt, die an einem Ende um eine waagerechte Achse schwenkbar gelagert ist und am anderen Ende durch die Kraftmesseinrichtung abgestützt wird. In diesen Fällen ist die Kraft, die für eine als punktförmig gedachte Masse gemessen wird, vom Abstand des Massenpunktes zu dem Unterstützungspunkt bzw. dem freien Ende der Klappe abhängig, da die Masse dann über einen variablen Hebelarm auf die Kraftmesseinrichtung wirkt. Für eine punktförmige Masse hat die Kraft/Weg-Kurve dann einen rampenförmigen oder sägezahnförmigen Verlauf. Es ist jedoch möglich, diese Kraft/Weg-Funktion mit einer geeigneten Korrekturfunktion zu multiplizieren, so dass man für eine Punktmasse wieder ein rechteckförmiges Signal erhält. Wenn dann beim Verwiegen eines kontinuierlichen Massenstromes über den Weg der Fördereinrichtung integriert wird, so muss die gemessene Kraft/Weg-Funktion mit der Korrekturfunktion gewichtet oder, mathematisch gesprochen, gefaltet werden, damit das Integral dem kumulierten Massendurchsatz entspricht.
Als Kraftmesseinrichtung wird bevorzugt eine bekannte Messeinrichtung verwendet, die eine schnelle und empfindliche Kraftmessung bei geringer mechanischer Auslenkung des Messaufnehmers erlaubt. Für eine einzelne Kraftmessung wird bei dieser Messzelle nur eine Zeit in der Größenordnung von einer Millisekunde benötigt, so dass eine Kraftmessung mit extrem hoher zeitlicher Auflösung möglich ist.

Bevorzugt wird der gemeinsame, durchgehende und in vertikaler Richtung biegeschlaffe Förderabschnitt durch ein durchgehendes Förderband gebildet
Die Vorrichtung erlaubt die jederzeitige Durchführung von Eichmessungen bei inaktiver Behandlungseinrichtung. Wenn beispielsweise im Fall eines Injektors die Zufuhr von Flüssigkeit zu den Nadeln unterbrochen wird, so kann im Zug einer solchen Eichmessung überprüft werden, ob die Eingangswaage und die Ausgangswaage für die Produkte vor und nach dem Durchlauf durch die Behandlungseinrichtung dasselbe Gewicht messen. Wahlweise ist es auch möglich, Eichgewichte auf die Fördereinrichtung aufzulegen, so dass die Eingangswaage und die Ausgangswaage auch bezüglich des gemessenen Absolutgewichts geeicht werden können. Da Eichmessungen praktisch jederzeit bei laufender Produktion eingeschoben werden können, lässt sich die korrekte Eichung der Waagen in kurzen Zeitintervallen überprüfen.

Im folgenden werden Ausführungsbeispiele der Erfindung anhand der Zeichnung näher erläutert.
Es zeigen:
- Fig. 1: eine schematische Ansicht einer Vorrichtung zur Behandlung von Lebensmittelprodukten;
- Fig. 2: eine vergrößerte schematische Seitenansicht einer Vorrichtung zur Massenverwiegung, die Teil der in Fig. 1 gezeigten Vorrichtung ist;
- Fig. 3: einen Grundriss der Wiegevorrichtung nach Fig. 2;
- Fig. 4: ein Diagramm zur Erläuterung der Wiegevorrichtung beim Verwiegen einer punktförmigen Masse;
- Fig. 5: ein Diagramm analog zu Fig. 4, zur Erläuterung der Funktionsweise der Wiegevorrichtung beim Verwiegen eines kontinuierlichen Massenstromes;
- Fig. 6: ein Diagramm von Messergebnissen einer Eingangswaage und einer Ausgangswaage der Behandlungsvorrichtung nach Fig. 1;
- Fig. 7: eine Darstellung zur Erläuterung der Auswertung des Diagramms nach Fig. 6; und
- Fig. 8: eine schematische Ansicht der Vorrichtung nach Fig. 1 zusammen mit verschieden Einrichtungen zur Aufgabe der Lebensmittelprodukte auf eine Fördereinrichtung.

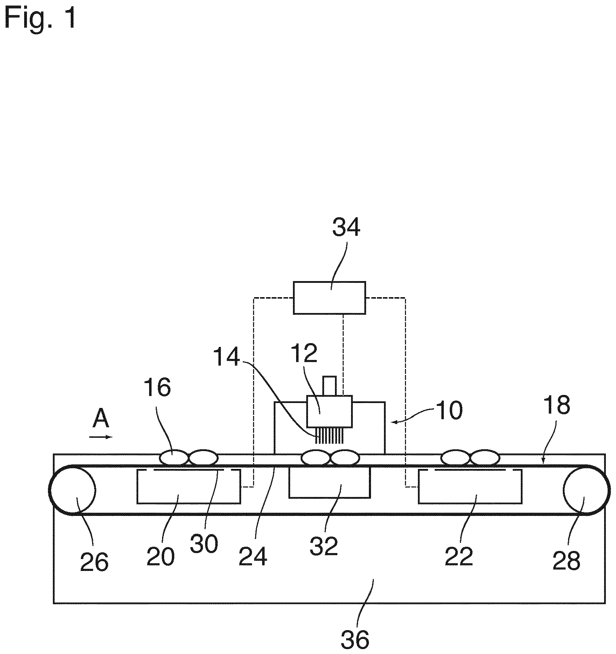

Als Beispiel für eine Vorrichtung zur Behandlung von Lebensmittelprodukten zeigt Fig. 1 eine Pökelvorrichtung. Diese Pökelvorrichtung weist einen an sich bekannten Injektor 10 auf, der mindestens einen taktweise auf und ab bewegbaren Nadelträger 12 aufweist und dazu dient, Pökellake mit Hilfe von hohlen Nadeln 14 in Lebensmittelprodukte 16 zu injizieren. Der Nadelträger 12 ist oberhalb einer Fördereinrichtung 18 installiert, mit der die Lebensmittelprodukte 16 in der durch einen Pfeil A angegebenen Richtung zugeführt und wieder abtransportiert werden.

An der Fördereinrichtung 18 ist in Förderrichtung vor dem Injektor 10 eine Eingangswaage 20 angeordnet, mit der das Gewicht der Lebensmittelprodukte 16 vor der Injektion bestimmt werden kann. Eine mit der Eingangswaage baugleiche Ausgangswaage 22 ist in Bezug auf den Injektor 10 symmetrisch zu der Eingangswaage 20 hinter dem Injektor 10 angeordnet und dient dazu, das Gewicht der Lebensmittelprodukte nach der Injektion zu bestimmen. Durch Bestimmung der Differenz zwischen dem Gewicht derselben Lebensmittelprodukte 16 vor und nach der Injektion lässt sich so die durch die Injektion von Flüssigkeit verursachte Gewichtszunahme feststellen und damit die injizierte Flüssigkeitsmenge während des Betriebs fortlaufend kontrollieren. Erforderlichenfalls kann dann z. B. durch Verändern des Einspritzdruckes oder der Einspritzzeit oder mittels volumetrischer Maßnahmen die Menge an injizierter Pökellake in einem geschlossenen Regelkreis geregelt werden.

Die Fördereinrichtung 18 weist ein Förderband 24 auf, das sich als durchgehender Förderabschnitt von einer ersten Umlenkrolle 26 über die Eingangswaage 20, den Injektor 10 und die Ausgangswaage 22 zu einer zweiten Umlenkrolle 28 erstreckt. Das Förderband 24 (dessen oberer Trumm) liegt auf Verwiegeplatten 30 der Eingangswaage 20 und der Ausgangswaage 22 auf. Das Förderband 24 ist biegeschlaff, so dass das Gewicht der Produkte 16, die sich auf dem Förderband über der jeweiligen Waage befinden, auf die Verwiegeplatte 30 drückt und einen Messausschlag der Waage bewirkt. Im Bereich des Injektors 10 läuft das Förderband 24 über ein Widerlager 32, das eine Auslenkung des Förderbandes verhindert, wenn die Nadeln 14 in die Lebensmittelprodukte einstechen.

Eine elektronische Steuereinheit 34 steuert die Betriebsabläufe im Injektor 10 und steuert auch einen hier nicht gezeigten Antrieb für das Förderband und nimmt außerdem Messsignale von der Eingangswaage 20 und der Ausgangswaage 22 auf, die permanent in Betrieb sein können.

Der Injektor 10 ist portalartig auf einem Gestell 36 montiert, das auch die Fördereinrichtung 18 und die Eingangswaage 20 und die Ausgangswaage 22 aufnimmt.

Die Fördereinrichtung 18 wird taktweise angetrieben und wird durch die Steuereinheit 34 mit dem Arbeitstakt des Injektors 10 synchronisiert. In einem Förderschritt werden Lebensmittelprodukte 16 in den Bereich unter dem Nadelträger 12 transportiert. In dieser Position hält das Förderband an, und der Nadelträger 16 beginnt mit dem Abwärtshub, so dass die Nadeln 14 in die Lebensmittelprodukte einstechen und Pökellake in die Lebensmittelprodukte injiziert wird. Beginn und Ende der Lakezufuhr werden dabei durch die Steuereinheit 34 mit Hilfe nicht gezeigter Ventile gesteuert. Wenn der Nadelträger 12 seinen unteren Totpunkt erreicht hat, bewegt er sich wieder nach oben, so dass die Nadeln 14 wieder aus den Lebensmittelprodukten herausgezogen werden. Dabei kann ein nicht gezeigter Niederhalter die Lebensmittelprodukte von den Nadeln 14 abstreifen und so verhindern, dass die Lebensmittelprodukte mit den Nadeln angehoben werden.

Wenn sich der Nadelträger 12 seinem oberen Totpunkt nähert, haben die Nadeln 14 die Lebensmittelprodukte wieder freigegeben. In dieser Betriebsphase aktiviert die Steuereinheit 34 die Fördereinrichtung, und mit der Eingangswaage 20 wird das Gewicht der Lebensmittelprodukte 16 gemessen, die sich in diesem Stadium über die Eingangswaage 20 bewegen. Gleichzeitig wird mit der Ausgangswaage 22 das Gewicht der Lebensmittelprodukte 16 bestimmt, die bereits den Injektor 10 passiert haben und sich nun über die Ausgangswaage 22 bewegen. Die Messprozesse beider Waagen sind innerhalb weniger Millisekunden abgeschlossen. Die Messergebnisse werden in der Steuereinheit 34 gespeichert. Das von der Ausgangswaage 22 gelieferte Messergebnis wird mit dem gespeicherten Messergebnis verglichen, das die Eingangswaage 20 für dieselben Produkte geliefert hat. Auf diese Weise kann die durch die Injektion von Flüssigkeit bedingte Gewichtszunahme der Lebensmittelprodukte präzise kontrolliert werden.

Es beginnt dann der nächste Arbeitstakt der Fördereinrichtung 18. In diesem Takt werden die Lebensmittelprodukte, die sich in der Zeichnung unter dem Nadelträger 12 befinden, über die Ausgangswaage 22 abtransportiert, während die Lebensmittelprodukte, die auf der Eingangswaage 20 verwogen wurden, unter den Nadelträger 12 gelangen. Neue Lebensmittelprodukte (nicht gezeigt) werden auf der Eingangsseite der Fördereinrichtung in beliebiger Folge zugeführt. Wenn die Fördereinrichtung 18 wieder anhält, beginnt ein neuer Arbeitstakt des Injektors 10, so dass die nächste Gruppe von Lebensmittelprodukten behandelt wird.

Bei Bedarf können Eichmessungen vorgenommen werden, ohne dass dazu der die Fördereinrichtung 18 und der Injektor 10 angehalten werden müssen. Es wird lediglich die Zufuhr von Lake zu den Nadeln 14 unterbunden, so dass sich das Gewicht der Lebensmittelprodukte theoretisch nicht ändern darf, was mit Hilfe der Eingangs- und Ausgangswaagen 20, 22 kontrolliert werden kann. Wenn sich aus irgendwelchen Gründen doch eine Gewichtsdifferenz zeigen sollte, werden die Messergebnisse entsprechend korrigiert (kalibriert).

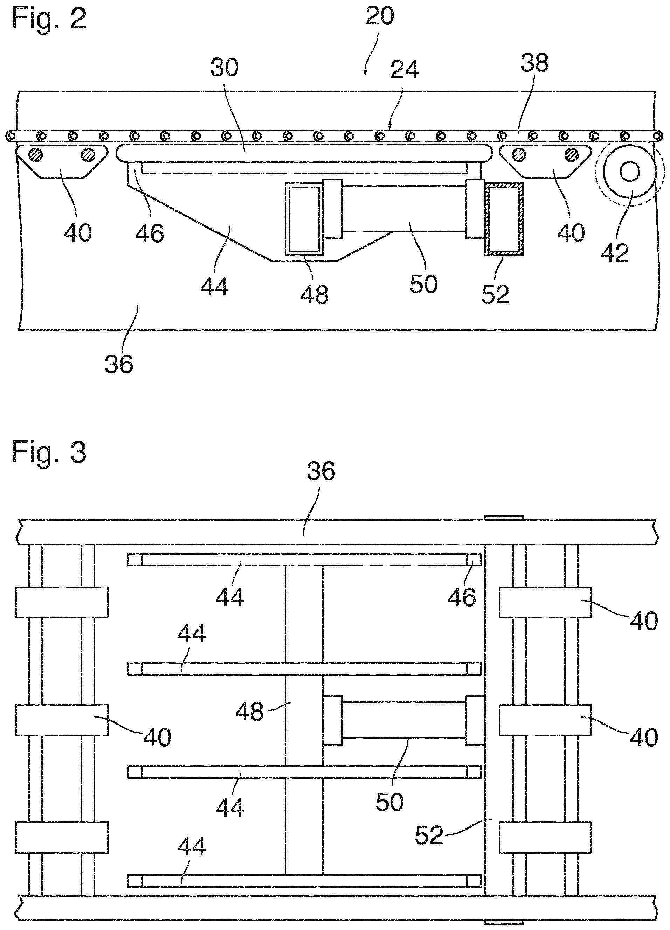

Der genauere Aufbau der Eingangswaage 20 und der Ausgangswaage 22 und deren Funktionsweise sollen nachstehend unter Bezugnahme auf Fig. 2 bis 5 am Beispiel der Eingangswaage 20 näher erläutert werden.

Wie Fig. 2 zeigt, wird das Förderband 24 durch gelenkig miteinander verbundene Kettenglieder 38 gebildet, so dass eine hohe Biegeschlaffheit bei gleichzeitig hoher Zugfestigkeit erreicht wird. Vor und hinter der Ausgangswaage 22 liegt das Förderband auf Auflagern 40 auf, die starr am Gestell 36 befestigt sind. Stromabwärts des hinteren Auflagers 40 ist ein Satz von Antriebszahnrädern 42 angeordnet, die mit dem erwähnten Antrieb der Fördereinrichtung 18 verbunden sind und mit dem Förderband 24 kämmen, um den Vortrieb des Förderbandes zu bewirken.

Ein zwischen den Auflagern 40 liegender Förderabschnitt des Förderbandes 24 liegt auf der Verwiegeplatte 30 auf. Die Verwiegeplatte 30 stützt sich ihrerseits auf vier Tragsegmenten 44 ab, die, wie Fig. 3 zeigt, gleichmäßig über die Breite der Fördereinrichtung verteilt sind. In Fig. 3 sind aus Gründen der Deutlichkeit das Förderband 24 und die Verwiegeplatte 30 weggelassen. Die Tragsegmente 44 weisen jeweils an beiden Enden nach oben vorspringende Stütznocken 46 auf, mit denen sie die Verwiegeplatte 30 gleichmäßig und kippstabil abstützen. Alle vier Tragsegmente 44 sind durch einen quer zur Förderrichtung verlaufenden Träger 48 starr miteinander verbunden. Der Träger 48 sitzt am freien Ende einer Wiegezelle 50, deren anderes Ende an einer Traverse 52 befestigt ist. Während der Träger 48 sich nur zwischen den Tragsegmenten 44 erstreckt und keine Verbindung zum Gestell 36 hat, ist die Traverse 52 mit beiden Enden starr im Gestell 36 befestigt. Die Traverse 52 und der Träger 48 haben torsionssteife Profile, während die Wiegezelle 50 als Biegebalken ausgebildet ist, der sich bei Belastung der Verwiegeplatte 30 geringfügig verbiegt.

Da das Förderband 24 reibungsarm auf der Verwiegeplatte 30 aufliegt und in vertikaler Richtung biegeschlaff ist, wird die Gewichtskraft einer auf dem Förderband liegenden Masse unmittelbar auf die Verwiegeplatte 30 übertragen, so dass eine entsprechende Verbiegung der Wiegezelle 50 verursacht wird. Das Ausmaß dieser Verbiegung, der Messhub, ist jedoch extrem gering, so dass das Förderband 24 praktisch keine Auslenkung in vertikaler Richtung erfährt und demzufolge die von der Wiegezelle 50 gemessene Kraft praktisch unabhängig von der Zugspannung des Förderbandes 24 ist.

Erforderlichenfalls kann anstelle der Antriebszahnräder 42 oder zusätzlich zu diesen ein Satz von Vorschubzahnrädern (nicht gezeigt) stromaufwärts der Verwiegeplatte 30 angeordnet sein, so dass auf das Förderband 24 eine Schubkraft übertragen wird und somit Zugspannungen im Förderband unterdrückt werden.

Da die Verwiegeplatte 30 durch die Tragsegmente 44 praktisch auf ihrer gesamten Fläche gleichmäßig abgestützt wird, ist die von der Wiegezelle 50 gemessene Kraft auch weitgehend unabhängig davon, wie sich die Masse auf der Verwiegeplatte verteilt.

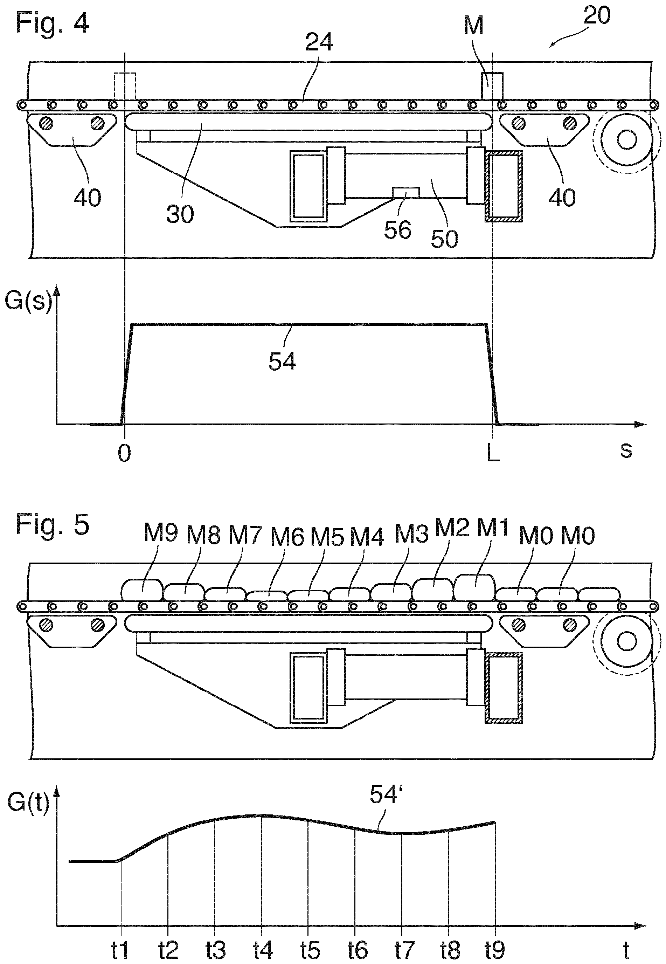

In Fig. 4 ist dies für den Fall illustriert, dass mit dem Förderband 24 eine nahezu punktförmige Masse M über die Eingangswaage 20 bewegt wird. Unmittelbar vor und hinter der Verwiegeplatte 30 wird das Förderband durch die starren Auflager 40 abgestützt. Solange sich die Masse M über diesen Auflagern befindet, wird deshalb von der Wiegezelle 50 keine Kraft gemessen. Wenn die Masse M das vordere Auflager 40 verlässt und in eine Position über dem vorderen Ende der Verwiegeplatte 30 gelangt (in Fig. 4 gestrichelt eingezeichnet), so nimmt die von der Wiegezelle 50 gemessene Kraft G schlagartig von null auf einen Wert zu, der durch das Gewicht der Masse M gegeben ist. Während sich die Masse M mit dem Förderband 24 über die Verwiegeplatte 30 bewegt, bleibt die gemessene Kraft annähernd konstant. In Fig. 4 ist die gemessene Kraft G als Funktion des vom Förderband 24 zurückgelegten Weges s als Kraft/Weg-Kurve 54 dargestellt. Man erkannt, dass diese Kurve annähernd rechteckförmig ist. Der Punkt s = 0 entspricht der Position des Förderers, bei dem die Masse M die vordere Kante der Verwiegeplatte 30 erreicht und demgemäß die Kraft sprunghaft zunimmt. Der Weg s = L entspricht dem Punkt, an dem die Masse M die Verwiegeplatte 30 wieder verlässt und dementsprechend die Kraft G sprunghaft wieder auf null abnimmt.

Die Wiegezelle 50 benötigt für eine einzelne Kraftmessung nur eine Zeit in der Größenordnung von 1 ms, so dass die durch die Kurve 54 repräsentierte Kraft/Weg-Funktion mit hoher zeitlicher (und räumlicher) Auflösung aufgenommen werden kann. Für praktische Zwecke genügt im allgemeinen eine Auflösung in der Größenordnung von 1 s, so dass bei einer Kraftmessung im Sekundentakt jeweils über etwa 1000 Einzelmessungen gemittelt werden kann und somit das Rauschen unterdrückt werden kann. Die Messzelle 50 enthält eine integrierte elektronische Auswerteeinrichtung 56, mit der zumindest eine Vorauswertung des Messsignals vorgenommen wird. Diese Auswerteeinrichtung 56 erhält von der Steuereinheit 34 ein Signal, das die Vortriebsgeschwindigkeit der Fördereinrichtung 18 angibt. Somit ist die Auswerteeinrichtung 36 in der Lage, das gemessene Kraftsignal über den Weg s zu integrieren. Das Gewicht der Masse M lässt sich somit auch dadurch bestimmen, dass die gemessene Kraft über den vom Förderband zurückgelegten Weg von 0 bis L integriert wird und das Integral dann durch die Länge L der Verwiegeplatte 30 (in Förderrichtung gemessen) dividiert wird. Wenn die Masse M die Verwiegeplatte 30 am stromabwärtigen Ende verlässt, entspricht das Integral dem Massendurchsatz, d.h., der Masse, die vom Förderband 24 in der Zeit über die Eingangswaage 20 transportiert wurde, in der sich das Förderband um die Länge L der Verwiegeplatte 30 weiterbewegt hat.

Dieses Messprinzip lässt sich auch dann anwenden, wenn das Förderband 24 anstelle der nahezu punktförmigen Masse M eine beliebige Massenverteilung transportiert, wie sie in Fig. 5 durch eine Folge von Massekörpern M0 - M9 symbolisiert wird. In diesem Fall ist zwar die Kraft/Weg-Kurve nicht mehr rechteckförmig, aber nach wie vor ist der Massendurchsatz gegeben durch das Wegintegral der Kraft dividiert durch die Länge L.

Man kann die Integration ununterbrochen fortsetzen, um, nach Division durch L, für jeden Zeitpunkt die kumulierte Masse zu erhalten, die seit Beginn der Messung die Eingangswaage 20 verlassen hat.

In dem Diagramm in Fig. 5 ist anstelle der Kraft/Weg-Funktion die Kraft/Zeit-Funktion G(t) als Kurve 54' dargestellt. Es versteht sich, dass man die Zeit t jederzeit in den Weg s umrechnen kann, indem man jedes Zeitintervall mit der jeweils aktuellen Geschwindigkeit des Förderbandes 24 multipliziert.

In dem in Fig. 5 dargestellten Beispielfall wurde zu Illustrationszwecken angenommen, dass auf dem Förderband 24 zunächst eine Folge von Massekörpern M0 zugeführt wird, die alle dieselbe Masse haben, so dass die Massendichte auf dem Förderband konstant ist. Zum Zeitpunkt t1 erreicht dann ein größerer Massekörper M1 die stromaufwärtige Kante der Verwiegeplatte 30. Da gleichzeitig ein kleinerer Massekörper M0 die Verwiegeplatte 30 am stromabwärtigen Ende verlässt, nimmt die insgesamt auf der Verwiegeplatte liegende Masse zu, so dass die Kurve 54' von dem Zeitpunkt t1 an einen Anstieg zeigt. Während nacheinander die Massekörper M2 und M3 auf die Verwiegeplatte gelangen, steigt die Kurve 54' weiter an, doch wird die Steigung geringer, da die Größe der Massekörper von M2 nach M4 abnimmt. Wenn zum Zeitpunkt t4 der Massekörper M4 die Verwiegeplatte erreicht, steigt die Kurve nicht weiter an, da der Massekörper M4 dieselbe Masse hat wie der Massekörper M0, der zu diesem Zeitpunkt die Verwiegeplatte verlässt. Wenn nachfolgend kleinere Massekörper M5 - M7 zugeführt werden, nimmt die Kurve 54' ab, und bei Zufuhr der größeren Massekörper M8 und M9 steigt sie wieder an. Im oberen Teil der Fig. 5 ist der Zustand zum Zeitpunkt t9 illustriert. Danach würde der große Massekörper M1 die Verwiegeplatte verlassen, so dass die Kurve 54' deutlich abnehmen würde.

Der Funktionswert G(t9) zur Zeit t9 ist gleich der Gesamtmasse der Massekörper M1 - M9, die zu diesem Zeitpunkt auf der Verwiegeplatte 30 liegen. Das Wegintegral, also die Fläche unter der Kurve 54' zwischen den Zeitpunkten t1 und t9, dividiert durch die Länge L der Verwiegeplatte, entspricht einem gleitenden Mittelwert, nämlich einer gewichteten Summe der Massen der Massenkörper M1 - M9 mit von M1 nach M9 linear abnehmenden Gewichten. Wenn sich schließlich das Förderband noch einmal um die Strecke L weiterbewegt hat und der letzte Massekörper M9 die Verwiegeplatte verlässt, so sind alle Massekörper M1 - M9 mit maximalem Gewicht in das Integral eingeflossen und das durch L dividierte Integral hat seit t1 um das Gesamtgewicht der Massen M1 - M9 zugenommen.

Wenn mit der in Fig. 1 gezeigten Pökelvorrichtung eine Charge von Lebensmittelprodukten 16 gepökelt werden soll, so wird man vorzugsweise diese Lebensmittelprodukte 16 in dichter Folge, praktisch lückenlos, auf die Fördereinrichtung 18 aufgeben und durch die Pökelvorrichtung transportieren. Wenn das erste dieser Lebensmittelprodukte den vorderen Rand der Verwiegeplatte 30 in der Eingangswaage 20 erreicht, so steigt bei dieser Waage das Kraft/Zeit-Signal G(t) abrupt von null auf einen höheren Wert an. Dieser Anstieg des Signals zeigt der Steuereinrichtung 34 an, dass eine Charge von Lebensmittelprodukten zugeführt wird, so dass die Steuereinrichtung daraufhin die Fördereinrichtung 18 und den Injektor 10 zeitgerecht ansteuern kann. Gleichzeitig wird eine kontinuierliche Massenverwiegung durch Integration der Kraft/Weg-Funktion G(s) ausgelöst. Diese Integration wird dann ununterbrochen fortgesetzt und liefert die Gesamtmasse der Lebensmittelprodukte, die dem Injektor 10 zugeführt werden. Wenn die Fördereinrichtung 18 zwischendurch angehalten wird oder mit geringerer Geschwindigkeit läuft, hat das auf die Massenverwiegung keinen Einfluss, da ja nicht über die Zeit, sondern über den Weg s integriert wird. Die Vorrichtung kann so konfiguriert sein, dass ein akustisches Signal ausgegeben wird, wenn ein vorgegebener Sollwert für die Gesamtmasse erreicht ist. Durch dieses Signal wird dann das Personal informiert, das die erforderliche Menge von Lebensmittelprodukten behandelt worden ist und keine weiteren Lebensmittelprodukte mehr auf die Fördereinrichtung aufgelegt zu werden brauchen. Andernfalls kann die Integration und damit die Massenverwiegung auch automatisch beendet werden, wenn während einer gewissen Zeitspanne keine neuen Lebensmittelprodukte zugeführt werden.

Die von der Länge L der Verwiegeplatte 30 abhängige Verweildauer der Lebensmittelprodukte auf der Eingangswaage führt dazu, dass bei der fortlaufenden Massenverwiegung eine zeitliche Mittelung mit der Verweildauer als Zeitkonstante stattfindet. Diese Mittelung führt zu einer Verringerung des Messrauschens und zu einer erhöhten Messgenauigkeit. Eine größere Länge L der Verwiegeplatte 30 trägt außerdem dazu bei, die Waage robuster gegen Störeinflüsse wie etwa Einflüsse aufgrund der Zuspannung des Förderbandes 24 zu machen.

Erforderlichenfalls kann jedoch durch Auswertung der Kraft/Weg-Funktion G(s) der Massendurchsatz auch mit höherer zeitlicher Auflösung bestimmt werden. Wenn eine neue Charge von Lebensmittelprodukten zugeführt wird, so nimmt in dem Zeitintervall, in dem das erste dieser Produkte sich vom vorderen zum hinteren Rand der Verwiegeplatte 30 bewegt, die Kraft/Weg-Funktion G(s) monoton zu, da ständig neue Produkte zugeführt werden aber auf der stromabwärtigen Seite noch keine Produkte die Verwiegeplatte 30 verlassen. Die Steigung (Ableitung nach dem Weg) dieser Funktion gibt zu diesem Zeitpunkt die Massenverteilung (Masse pro Längeneinheit in Förderrichtung) der Produkte auf der Verwiegeplatte 30 an. Diese Verteilung kann gespeichert werden. Wenn sich das Förderband 24 dann weiter über die Verwiegeplatte 30 bewegt, ändert sich der Wert der Funktion G(s) um den Saldo der Masse, die am vorderen Ende neu auf die Verwiegeplatte gelangt, vermindert um die Masse, die am hinteren Ende die Verwiegeplatte verlässt. Diese letztere Masse ist aber aus der gespeicherten Massenverteilung bekannt. Aus der aktuellen Steigung der Funktion G(s) an der Stelle s = 0 lässt sich daher die Massendichte des Produktstranges berechnen, der zu diesem Zeitpunkt am stromaufwärtigen Ende auf die Verwiegeplatte 30 gelangt. Allgemein ist die Massendichte an einem bestimmten Ort so längs des Förderbandes gegeben durch die Steigung der Funktion G(s) an der Stelle so minus die (ggf. negative) Steigung an der Stelle so - L. Auf diese Weise lässt sich die Massenbilanz ständig fortschreiben und die Massenverteilung des Produkts kontinuierlich aufzeichnen, mit einer räumlichen Auflösung, die deutlich höher sein kann als die Länge L der Verwiegeplatte 30.

Beispielsweise kann diese hochaufgelöste Massenverteilung dazu verwendet werden, den Injektor 10 so anzusteuern, dass die eingespritzte Lakemenge (oder der Einspritzdruck oder die Einspritzzeit) präzise an das Massenprofil der unter dem Injektor durchlaufenden Produkte angepasst wird.

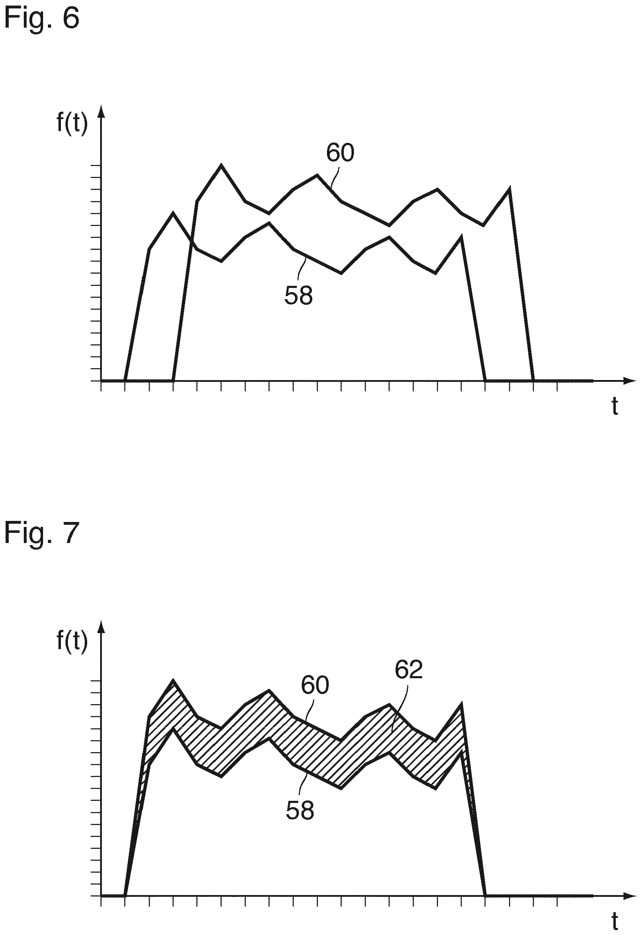

Die Ausgangswaage 22 arbeitet nach dem gleichen Prinzip wie die oben beschriebene Eingangswaage. Durch Vergleich der Messergebnisse der Eingangswaage und der Ausgangswaage lässt sich dann die Menge an injizierter Lake bestimmen, wie in Fig. 6 und 7 illustriert wird.

In Fig. 6 zeigt eine Kurve 58 den mit der Eingangswaage 20 gemessenen Massendurchsatz φ(t) als Funktion der Zeit t. Je nach Anwendungszweck und gewünschter Genauigkeit kann diese Kurve mit Mittelung über die Länge L der Verwiegeplatte 30 oder aber mit höherer Auflösung aufgenommen werden.

Die Kurve 60 in Fig. 6 zeigt den Massendurchsatz, der mit der Ausgangswaage 22 gemessen wurde. Die Werte sind insgesamt höher, weil mit dem Injektor Lake in die Lebensmittelprodukte 16 injiziert wurde, und diese Lake von der Ausgangswaage 22 mitgewogen wird. Außerdem sind die Kurven 58 und 60 zeitversetzt, nämlich um die Zeitspanne, die die Fördereinrichtung 18 benötigt, die Produkte von der Eingangswaage zur Ausgangswaage zu transportieren.

Aufgrund von Fluktuationen der injizierten Lakemenge wird die Kurve 60 im allgemeinen nicht das genaue Abbildung der Kurve 58 sein, doch weisen beiden Kurven immerhin eine übereinstimmende Flankencharakteristik auf, so dass es durch Analyse dieser Flankencharakteristik möglich ist, die beiden Kurven zu synchronisieren oder, bildlich gesprochen, übereinander zu legen, wie in Fig. 7 dargestellt ist. Wahlweise kann die Synchronisation auch anhand des bekannten Abstands der beiden Waagen anhand und der kontinuierlich erfassten Bewegung des Förderbandes erfolgen.

Die zwischen den beiden Kurven 58 und 60 in Fig. 7 eingeschlossene Fläche 62 ist ein Maß für die Lakemenge, die insgesamt in die Charge der Lebensmittelprodukte injiziert wurde. Diese Lakemenge kann durch Integration bestimmt werden.

Entsprechend ist die Differenz zwischen den beiden Kurven 58 und 60 in Fig. 7 bei einem gegebenen Zeitpunkt t ein Maß für den Massedurchsatz an injizierter Lake zu diesem Zeitpunkt.

Mit der Synchronisation der beiden Kurven 58 und 60 braucht nicht abgewartet zu werden, bis die komplette Charge bearbeitet ist, sondern sie kann bereits vorgenommen werden, sobald die ersten Produkte die Ausgangswaage 22 erreichen (die Synchronisation kann dann durch weitere Beobachtung der Flankencharakteristik fortlaufend kontrolliert und erforderlichenfalls korrigiert werden). Auf diese Weise erhält man unmittelbar nach der Injektion der Lake, nämlich sobald die Produkte, in welche die Lake injiziert wurde, die Ausgangswaage 22 erreicht haben, eine Rückmeldung über die injizierte Lakemenge. Anhand dieser Rückmeldung kann dann die injizierte Lakemenge mit geringer Regelverzögerung auf einen Sollwert eingeregelt werden, wobei dieser Sollwert seinerseits von der (mit der Eingangswaage 20) gemessenen Masseverteilung der Lebensmittelprodukte abhängig sein kann.

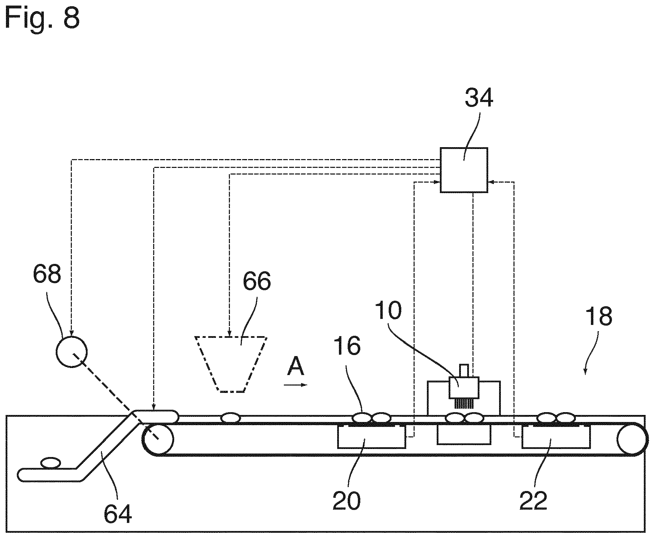

Die erfindungsgemäße Wiegeeinrichtung, die durch die Eingangswaage 20 und/oder die Ausgangswaage 22 gebildet wird, lässt sich allgemein auch dazu nutzen, die Kapazitätsauslastung einer Produktverarbeitungslinie zu optimieren. Als Beispiel zeigt Fig. 8 eine Verarbeitungslinie, die durch den Förderer 18 und den Injektor 10 sowie einen Z-Förderer 64 gebildet wird, mit dem die Lebensmittelprodukte 16 am stromaufwärtigen Ende auf die Fördereinrichtung 18 aufgegeben werden. Der Z-Förderer 64 weist in bekannter Weise einen stromaufwärtigen Aufgabeabschnitt auf, auf den die Lebensmittelprodukte beispielsweise von Hand aufgelegt werden können, einen ansteigenden Abschnitt, und einen Übergabeabschnitt, von dem aus die Lebensmittelprodukte auf das Förderband der Fördereinrichtung 18 fallen. Die Transportgeschwindigkeit des Z-Förderers 64 ist unabhängig von der Transportgeschwindigkeit der Fördereinrichtung 18 und ist durch die Steuereinrichtung 34 steuerbar. Wenn das Personal angewiesen wird, den Aufgabeabschnitt des Z-Förderers mit neuen Produkten zu befüllen, sobald die früher aufgelegten Produkte den ansteigenden Abschnitt erreicht haben, so bestimmt die Transportgeschwindigkeit des Z-Förderers 64 den Produktdurchsatz der Verarbeitungslinie und damit auch die Dichte, mit der die Produkte letztlich auf dem Förderband der Fördereinrichtung 18 liegen und dem Injektor 10 zugeführt werden.

Es soll nun angenommen werden, dass der Injektor 10 eine bestimmte Verarbeitungskapazität hat, die als verarbeitete Fleischmenge pro Zeiteinheit angegeben werden kann. Mit Hilfe der Eingangswaage 20 oder der Ausgangswaage 22 wird der Massendurchsatz gemessen. Dieser Massendurchsatz wird als Rückkopplungssignal der Steuereinrichtung 34 zugeführt, die anhand dieses Rückkopplungssignals die Transportgeschwindigkeit des Z-Förderers 64 so steuert, dass der Injektor 10 stets an der Kapazitätsgrenze arbeitet und somit optimal ausgelastet wird.

Dasselbe ist selbstverständlich auch mit anderen Einrichtungen zur Behandlung von Lebensmittelprodukten oder anderen Produkten möglich.

Alternativ kann die Steuereinrichtung 34 auch einen über der Fördereinrichtung 18 angeordneten Aufgabetrichter 66 ansteuern, der den Takt bestimmt, mit dem neue Produkte auf die Fördereinrichtung 18 fallengelassen werden.

In Fig. 8 ist außerdem symbolisch ein Motor 68 dargestellt, der die Fördereinrichtung 18 antreibt. Damit ist beispielsweise auch eine Arbeitsweise möglich, bei der das Personal angewiesen wird, die Lebensmittelprodukte dicht an dicht auf den Abschnitt der Fördereinrichtung 18 stromaufwärts der Eingangswaage 20 aufzulegen. Der Massendurchsatz wird dann durch die Transportgeschwindigkeit der Fördereinrichtung 18 bestimmt und lässt sich dadurch regeln, dass die Steuereinrichtung 34 den Motor 68 anhand des von der Eingangswaage 20 oder der Ausgangswaage 22 gelieferten Massendurchsatzes ansteuert.

## Patentansprüche

1. Verfahren zur Behandlung von Lebensmittelprodukten (16) mit einer Vorrichtung, die eine Fördereinrichtung (18) und eine Behandlungseinrichtung (10) sowie eine Eingangswaage (20) und eine Ausgangswaage (22) aufweist, die in Förderrichtung (A) vor und hinter der Behandlungseinrichtung (20) an der Fördereinrichtung (18) angeordnet sind, bei dem eine Massenverwiegung der Lebensmittelprodukte sowohl vor als auch nach der Behandlung in der Behandlungseinrichtung (10) durchgeführt wird und die Messergebnisse verglichen werden, wobei die Eingangswaage (20) und die Ausgangswaage (22) an einem gemeinsamen, durchgehenden und in vertikaler Richtung biegeschlaffen Förderabschnitt (24) der Fördereinrichtung (18) angeordnet sind und das Gewicht der Lebensmittelprodukte mit der Eingangswaage gemessen wird, wenn sie sich auf einem Teil des Förderabschnitts (24) über die Eingangswaage bewegen, und mit der Ausgangswaage (22) gemessen wird, wenn sie sich auf demselben Teil des Förderabschnitts über die Ausgangswaage bewegen, **dadurch gekennzeichnet, dass** die Massenverwiegung mit der Eingangswaage und der Ausgangswaage jeweils die folgenden Schritte aufweist:
- fortlaufendes Messen der auf den biegeschlaffen Förderabschnitt (24) wirkenden Gewichtskraft, während die Massen auf diesem Förderabschnitt transportiert werden,
- Aufnehmen einer Kraft/Weg-Funktion, die die gemessene Gewichtskraft in Abhängigkeit von dem von der Fördereinrichtung (18) zurückgelegten Förderweg angibt, und
- Berechnen des Massendurchsatzes der Fördereinrichtung durch Auswertung der Kraft/Weg-Funktion.

2. Verfahren nach Anspruch 1, bei dem der biegeschlaffe Förderabschnitt (24) in der Eingangswaage (20) und der Ausgangswaage (22) jeweils auf einer vorgegebenen Länge (L) in Transportrichtung gleichmäßig auf einer Kraftmesseinrichtung (50) abgestützt wird, so dass die gemessene Kraft unabhängig von der Verteilung der Massen auf dem Förderabschnitt ist.

3. Verfahren nach Anspruch 2, bei dem zur Berechnung des Massendurchsatzes die Kraft/Weg-Funktion über den von der Fördereinrichtung zurückgelegten Weg integriert wird.

4. Verfahren nach Anspruch 2, bei dem zur Berechnung des Massendurchsatzes die Differenz zwischen der Ableitung der Kraft/Weg-Funktion am eingangsseitigen Ende des abgestützten Förderabschnitts und der Ableitung der Kraft/Weg-Funktion am ausgangsseitigen Ende des abgestützten Förderabschnitts berechnet wird.

5. Verfahren nach einem der vorstehenden Ansprüche, bei dem der berechnete Massendurchsatz als Rückkopplungssignal zur Steuerung der Transportgeschwindigkeit der Fördereinrichtung (18) und/oder zur Ansteuerung einer Aufgabeeinrichtung (64, 66) benutzt wird, mit der die Massen auf die Fördereinrichtung (18) aufgeben werden.

6. Vorrichtung zur Behandlung von Lebensmittelprodukten (16), mit einer Fördereinrichtung (18), einer Behandlungseinrichtung (10) und einer Eingangswaage (20) und einer Ausgangswaage (22), die in Förderrichtung (A) vor und hinter der Behandlungseinrichtung (10) an der Fördereinrichtung (18) angeordnet sind, wobei die Eingangswaage (20) und die Ausgangswaage (22) an einem gemeinsamen, durchgehenden und in vertikaler Richtung biegeschlaffen Förderabschnitt (24) der Fördereinrichtung (18) angeordnet sind und jeweils eine Kraftmesseinrichtung (50) aufweisen, die den biegeschlaffen Förderabschnitt (24) von unten abstützt, **dadurch gekennzeichnet, dass** die Eingangswaage (20) und die Ausgangswaage (22) jeweils eine elektronische Auswerteeinrichtung (56) aufweisen, die eingerichtet ist zum Aufnehmen einer Kraft/Weg-Funktion, die die von der Kraftmesseinrichtung gemessene Gewichtskraft in Abhängigkeit von dem von der Fördereinrichtung zurückgelegten Förderweg (s) angibt, und zum Berechnen des Massendurchsatzes der Fördereinrichtung durch Auswertung der Kraft/Weg-Funktion.

7. Vorrichtung nach Anspruch 6, bei der der biegeschlaffe Förderabschnitt (24) in jeder der Eingangs- und Ausgangswaagen auf einer vorbestimmten Länge (L) in Förderrichtung auf einer Verwiegeplatte (30) aufliegt, die sich kippstabil auf der Kraftmesseinrichtung (50) abstützt.

8. Vorrichtung nach Anspruch 7, bei der die Kraftmesseinrichtung (50) als waagerecht orientierter Biegebalken ausgebildet ist, der mit einem Ende mit einem Punkt unter der Mitte der Verwiegeplatte (30) und mit dem anderen Ende an einem gestellfesten Bauteil (52) befestigt ist.

9. Vorrichtung nach einem der Ansprüche 6 bis 8, bei der die Behandlungseinrichtung (10) einen taktweise auf und ab bewegbaren Nadelträger (12) aufweist, der mit Nadeln (14) zur Injektion von Flüssigkeit in die Lebensmittelprodukte (16) bestückt ist.

## Claims

1. A method for treating food products (16) in a device comprising a conveyor system (18), and a treatment device (10) as well as an input scales (20) and an output scales (22) that are disposed at the conveyor system (18) upstream and downstream of the treatment device (10) in a direction (A) of conveyance, wherein a mass of the food products is weighed both before and after treatment in the treatment device (10) and the measured results are compared, wherein the input scales (20) and the output scales (22) are disposed at a common, continuous conveyor section (24) of the conveyor system (18) that is limp in a vertical bending direction, and the weight of the food products is measured with the input scales when they move on a part of the conveying section (24) over the input scales, and the weight is measured with the output scales when they move on the same part of the conveying section over the output scales,
**characterized in that** the weighing processes with the input scales and the output scales each comprise the steps of:
- continuously measuring the weight force that acts upon the limp conveyor section (24) while the masses are advanced on this conveyor section,
- recording a force/displacement function that indicates the weight force as a function of the distance travelled by the conveyor system (18), and
- calculating the mass flow rate of the conveyor system by evaluating the force/displacement function.

2. The method according to claim 1, wherein the limp conveyor section (24) in the input scales and the output scales is uniformly supported on a force measuring device (50) on a predetermined length (L) in the direction of conveyance, so that the measured force is independent of the distribution of the masses on the conveyor section.

3. The method according to claim 2, wherein, for calculating the mass flow rate, the force/displacement function is integrated over the distance that the conveyor system has travelled.

4. The method according to claim 2, wherein the mass flow rate is calculated by calculating the difference between the derivative of the force/displacement function at the input end of the supported conveyor section and the derivative of the force/displacement function at the output end of the supported conveyor section.

5. The method according to any of the preceding claims, wherein the calculated mass flow rate is used as a feedback signal for controlling one of the speed of the conveyor system (18) and a loading device (64, 66) with which the masses are loaded onto the conveyor system (18).

6. A device for treating food products (16), comprising a conveyor system (18), a treatment device (10) as well as an input scales (20) and an output scales (22) that are disposed at the conveyor system (18) upstream and downstream of the treatment device (10) in a direction (A) of conveyance, wherein the input scales (20) and the output scales (22) are disposed at a common, continuous conveyor section (24) of the conveyor system (18) that is limp in a vertical bending direction, and the scales each comprise a force measuring device (50) which supports the limp conveyor section from below,
**characterized in that** the input scales (20) and the output scales (22) each comprise an electronic processing device (56) configured for recording a force/displacement function that indicates the measured weight force as a function of the distance (s) travelled by the conveyor system, and for calculating the mass flow rate of the conveyor system by evaluating the force/displacement function.

7. The device according to claim 6, wherein the limp conveyor section (24) is supported, on a predetermined length (L) in the direction of conveyance, on a weighing plate (30) that is supported on the force measuring device (50) in a non-tiltable manner.

8. The device according to claim 7, wherein the force measuring device (50) is configured as a horizontally extending bending bar that has one end fixed to a point below the center of the weighing plate (30) and the other end fixed to a member (52) that is rigidly connected to a frame.

9. The device according to any of the claims 6 to 8, wherein the treatment device (10) comprises a needle carrier (12) that is adapted to be moved up and down cyclically and that is equipped with needles (14) for injecting liquid into the food products (16).

## Revendications

1. Procédé de traitement de produits alimentaires (16) en utilisant un système comportant un dispositif de convoyage (18) et un dispositif de traitement (10) ainsi qu'une balance d'entrée (20) et une balance de sortie (22), lesquelles balances sont agencées sur le dispositif de convoyage (18) en amont et en aval du dispositif de traitement (20) dans la direction de transport (A), dans lequel une pesée de masse des produits alimentaires est réalisée aussi bien avant qu'après le traitement dans le dispositif de traitement (10) et les résultats de mesure sont comparés, dans lequel la balance d'entrée (20) et la balance de sortie (22) sont agencées sur un tronçon de transport (24) du dispositif de convoyage (18) commun, continu et flexible dans une direction verticale, et le poids des produits alimentaires est mesuré avec la balance d'entrée lorsqu'ils se déplacent sur une partie du tronçon de transport (24) au-dessus de la balance d'entrée, et est mesuré avec la balance de sortie (22) lorsqu'ils se déplacent sur la même partie du tronçon de transport au-dessus de la balance de sortie, **caractérisé en ce que** la pesée de masse avec la balance d'entrée et la balance de sortie comporte respectivement les étapes suivantes consistant à :
- mesurer en continu le poids agissant sur le tronçon de transport flexible (24) pendant que les masses sont transportées sur ce tronçon de transport,
- enregistrer une fonction de force/déplacement qui indique le poids mesuré en fonction de la distance parcourue par le dispositif de convoyage (18), et
- calculer le débit massique du dispositif de convoyage en évaluant la fonction de force/déplacement.

2. Procédé selon la revendication 1, dans lequel le tronçon de transport flexible (24) dans la balance d'entrée (20) et la balance de sortie (22) est respectivement supporté de manière uniforme par un dispositif de mesure de force (50) sur une longueur prédéfinie (L) dans la direction de transport, de sorte que la force mesurée est indépendante de la répartition des masses sur le tronçon de transport.

3. Procédé selon la revendication 2, dans lequel la fonction de force/déplacement est intégrée sur la distance parcourue par le dispositif de convoyage afin de calculer le débit massique.

4. Procédé selon la revendication 2, dans lequel la différence entre la dérivée de la fonction de force/déplacement à l'extrémité située côté entrée du tronçon de transport supporté et la dérivée de la fonction de force/déplacement à l'extrémité situé côté sortie du tronçon de transport supporté est calculée afin de calculer le débit massique.

5. Procédé selon l'une des revendications précédentes, dans lequel le débit massique calculé est utilisé comme signal de rétroaction pour commander la vitesse de transport du dispositif de convoyage (18) et/ou pour commander un dispositif de chargement (64, 66) au moyen duquel les masses sont chargées sur le dispositif de convoyage (18).

6. Système pour traiter des produits alimentaires (16), comportant un dispositif de convoyage (18), un dispositif de traitement (10) ainsi qu'une balance d'entrée (20) et une balance de sortie (22) qui sont agencées sur le dispositif de convoyage (18) en amont et en aval du dispositif de traitement (10) dans la direction de transport (A), dans lequel la balance d'entrée (20) et la balance de sortie (22) sont agencées sur un tronçon de transport (24) du dispositif de convoyage (18) commun, continu et flexible dans la direction verticale, et comportent respectivement un dispositif de mesure de force (50) qui supporte le tronçon de transport flexible (24) par le dessous, **caractérisé en ce que** la balance d'entrée (20) et la balance de sortie (22) comportent respectivement un dispositif d'analyse électronique (56) conçu pour enregistrer une fonction de force/déplacement qui indique le poids mesuré par le dispositif de mesure de force en fonction de la distance (s) parcourue par le dispositif de convoyage, et pour calculer le débit massique du dispositif de convoyage en évaluant la fonction de force/déplacement.

7. Dispositif selon la revendication 6, dans lequel le tronçon de transport flexible (24) dans chacune des balances d'entrée et de sortie est supporté par un plateau de pesée (30) sur une longueur prédéterminée (L) dans la direction de transport, lequel plateau de pesée supporte le dispositif de mesure de force (50) de manière stable.

8. Dispositif selon la revendication 7, dans lequel le dispositif de mesure de force (50) est formé comme une poutre de flexion orientée horizontalement qui est fixée à une extrémité en un point situé sous le milieu du plateau de pesée (30) et à l'autre extrémité à un composant de bâti fixe (52).

9. Dispositif selon l'une des revendications 6 à 8, dans lequel le dispositif de traitement (10) comporte un porte-aiguilles (12) cycliquement mobile vers le haut et vers le bas, qui est équipé d'aiguilles (14) pour injecter du liquide dans les produits alimentaires (16).
